# EUROPEAN PATENT APPLICATION

(11) **EP 3 206 054 A1**
(43) Date of publication of application: **16.08.2017**
(21) Application number: 17155500.6
(22) Date of filing: 09.02.2017
(51) Int. Cl.: G01V 5/00

(54) **NEUTRON ASSAY**

(30) Priority: 09.02.2016 GB 201602312
(71) Applicant: Hybrid Instruments Limited, Lancaster, Lancashire LA1 1XB (GB); Pajarito Scientific Corporation, Santa Fe, NM 87505 (US)
(72) Inventor: JOYCE, Malcolm, Lancaster, Lancashire LA1 3HA (GB); ORR, Chris, Santa Fe, NM 87505 (US)
(74) Representative: HGF Limited

(57) **Abstract**

An embodiment of the present invention provides a method (300) of detecting fissile material, comprising measuring (310) background neutron detection events using a plurality of fast neutron detectors arranged around a stimulation neutron source, measuring (320) sample neutron detection events using the plurality of fast neutron detectors arranged around a small volume of sample (210) material, measuring (330) stimulated neutron detection events using the plurality of fast neutron detectors (230) when said sample material is irradiated by the stimulation neutron source, wherein the measuring comprises determining a number of single neutron detection events, and determining (340) a presence of fissile material in the sample material based upon the background neutron detection events, sample neutron detection events and the stimulated neutron detection events.

## Description

### Background

It is desired to detect fissile material. In some instances it is also desired to determine an amount of fissile material i.e. a mass of fissile material. Detecting fissile materials is made difficult by gamma shielding which may lead to a lack of detection of the fissile material or an underestimate of the amount of fissile material. Some methods of detecting fissile materials are expensive and may involve use of bulky equipment.

It is an object of embodiments of the invention to at least mitigate one or more of the problems of the prior art.

### Brief Description of the Drawings

Embodiments of the invention will now be described by way of example only, with reference to the accompanying figures, in which:
Figure 1 shows an apparatus according to an embodiment of the invention;
Figure 2 shows a method according to an embodiment of the invention;
Figure 3 shows an illustration of count rate against uranium enrichment produced by an embodiment of the invention; and
Figure 4 shows a further illustration of count rate against uranium enrichment produced by an embodiment of the invention.

### Detailed Description of Embodiments of the Invention

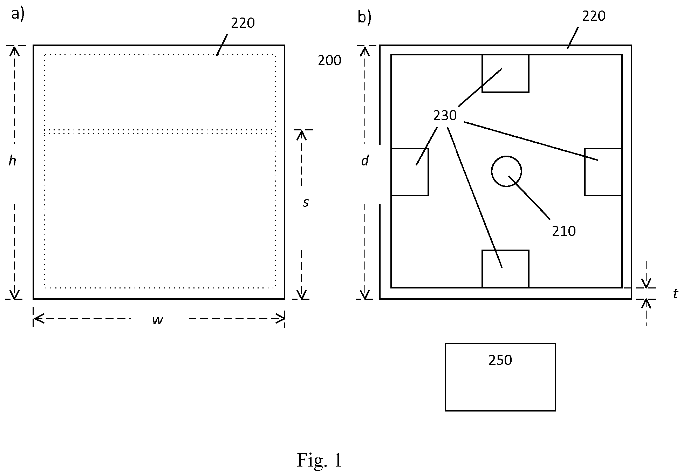

Figure 1 illustrates a neutron assay system 200 according to an embodiment of the invention. The system 200 may be used to detect fissile material. The system 200 may be used to determine a mass of fissile material.

In some embodiments the system may be used to determine an enrichment level of a fissile material. It may be desired to determine an enrichment level of a uranium enrichment of a uranium-containing substance, such as uranium dioxide such as, although not exclusively, ²³⁵U enrichment. Determining uranium enrichment is complicated because of an absence of gamma (γ-ray) emissions with sufficient intensity or energy to yield a tractable spectroscopic measurement. Furthermore, a spontaneous fission neutron yield may be too low for passive neutron coincidence methods. Whilst spontaneous fission in ²³⁸U might be detectable, where the target measurement is an assay of ²³⁵U, the slight differences in ²³⁸U that arise as a result of changes in enrichment (in the range 0.31% through to 5%) can be too subtle to enable satisfactory levels of measurement accuracy to be achieved within acceptable measurement times.

The system 200 comprises a container 220 for housing a small volume of sample material 210. Within the container 220 are arranged a plurality of fast neutron detectors 230 arranged around the sample 210. Each detector 230 is arranged to output a signal indicative of a neutron detection event. The signals are communicated to a control unit 250 which is arranged to receive the signal from each of the plurality of detectors 230 and to store data indicative of the received signals in a data storage device, such as a memory device coupled or comprised within the control unit 250. As will be explained below, a stimulation source is arranged to stimulate the sample 210 during a part of a measurement process.

The container 220 comprises a cavity or enclosed chamber. The container 220 may be constructed from a moderating material such as polyethylene, or other hydrogenous material. In use, the small volume of sample material 210 is located within the container 220. In one embodiment the container 220 comprises a plurality of walls, a base and lid. Figure 1(a) is a side-view of the container 220 showing a first side wall having a width *w* and a height *h.* Figure 1(b) illustrates a plan view of the container showing an internal layout of the container 200. The container comprises four side-walls each having a thickness *t.* The container has a depth *d.* In some embodiments the container 200 has equal width and depth i.e. *w*=*d* such that the container has a square-shaped footprint. In one embodiment *w*=*d*=750mm, although it will be realised that this is merely exemplary and that *w* and *d* may be less than 1m, for example. A height of the container 200 walls may be equal to *w* and *d* although in one embodiment the height *h* may be 760mm to allow for the base of 10mm, although it will be realised that other geometries may be envisaged. The wall thickness *t* may be 25mm although it will be realised that other values of *t* may be envisaged. The dimensions (*w*, *d, h*) of the cavity may be selected to optimize a probability of neutron detection by aiding the scattering of neutrons back into the measurement environment.

The sample being investigated may be elevated by a distance *s* off the base of the container 200. In one embodiment the sample 210 may be elevated at approximately 60% of the height *h* of the container 200, although it will be realised that elevation within a range of 40-70% of the container height *h* may be utilised. The plurality of detectors 230 are arranged at generally the same elevation s as the sample 210 within the container 200. The plurality of detectors 230 are arranged in the embodiment of Figure 1 at equal radial or circumferential intervals around the sample 210. The detectors 230 may be equidistantly spaced from the sample 210. The spacing from the sample 210 of the detectors 230 may be approximately half of the width and depth w, d of the container 200 i.e. around 375mm, although it will be realised that this is merely illustrative and other values may be envisaged. In particular, in one embodiment the detectors 230 are arranged to be proximal to or adjacent an interior surface of the respective walls of the container 200. The detectors 230 may be arranged in a horizontal arrangement equidistant from the sample 210. In one embodiment, a table or platform is provided inside the container 200 on which the sample 210 and detectors 230 are arranged to provide elevation from the floor of the container 200. The table or platform may be made from metal such as from aluminium, in particular formed from sheet aluminium. The elevation provides a space below the detectors 230 and the sample 210 for an interrogating source in some embodiments. Said space may assist in reducing scatter and providing a more uniform interrogating flux around the sample 210 as will be explained.

In the embodiment shown in Figure 1 four fast neutron detectors 230 (for example neutron detectors based on proton recoil interactions) are arranged around the sample 210, although it will be realised that other numbers of detectors 230 may be used. In this embodiment the detectors are arranged at 90° intervals around the sample 210, although it will be realised that other intervals may be used. The fast neutron detectors 230 are provided for detecting neutrons having an energy above 0.1MeV. The detectors 230 may be scintillation detectors. In one embodiment the scintillation detectors 230 have cell dimensions of 100 mm × 100 mm × 120 mm although it will be realised that the detectors 230 may have other dimensions. Each detector 230 may comprise a photomultiplier tube. Signals from the detectors 230 may be communicated via a wireless or wired link. In one embodiment high-voltage and signal cables are routed through ports in the polyethylene container 200 to the control unit.

The control unit may comprise a pulse-shape discrimination module. The pulse shape discrimination module is arranged to receive signals output by the detectors 230. The pulse-shape discrimination module may operate in real-time to processes input signal pulses in terms of their pulse shape. For example the pulse-shape discrimination module may operate at a rate of 500 MHz and a 3×10⁶ event rate. The pulse-shape discrimination module is arranged to produce a respective output signals corresponding to either γ rays or neutrons accordingly. The output signals may be TTL signals such as having a 50 ns width. The output signals are then routed to a derandomizer module the output which is fed to a multiplicity shift register or 'time-stamper' or list-mode electronics. The derandomizer module is provided for receiving signals from the detectors 230 and arranging the signals from the detectors sequentially, such that a number of detection events is determined from the derandomized signal without loss due to signal overlap or deadtime. In the absence of derandomisation, generally coincident detection signals from two or more of the detectors 230 may be incorrectly determined as one detection event. Measurements have been carried out with a 140 ns window in time set to isolate events only arriving in coincidence with one another within this window. Other coincidence counting electronic systems having more optimised coincidence windows for this application may also be used.

It is important to note that the detection of fast coincident neutrons from spontaneous fission events and the processing of the resulting counts through coincidence windows of <100 nanoseconds described here readily allows the passive measurement of high [alpha, neutron] salts such as PuF₄. The mass measurement of high [alpha, neutron] salts usually suffer high uncertainties when measured by conventional neutron or gamma methods.

In a method according to an embodiment of the invention the small sample 210 is stimulated for a part of a measurement process with neutrons from a stimulation source. The stimulation source may thus be arranged, at least for a duration of time, within the container 200 or may be arranged to direct emitted neutrons to the sample 210 within the container 200. The stimulation source may be arranged below the table or platform on which the sample 210 and detectors 230 are supported in the elevated position within the container 200. In some embodiments the stimulation source may be outside of the container 200, such as below the base of the container, to direct neutrons to the sample 210. The stimulation source may be an americium-lithium source, such as ²⁴¹Am-Li or an americium-beryllium source, such as ²⁴¹Am-Be. The stimulation source may have a neutron emission rate of around 87,900 s⁻¹ into 4π, although it will be realised that other sources that emit random neutrons and different neutron emission rates may be used. The stimulation source may be arranged to emit thermalized neutrons into the container. In one embodiment the stimulation source is installed in a moderating enclosure such as a polyethylene cylinder in order to thermalize the emitted neutrons from the stimulation source and to ensure that the stimulation source neutrons in the container 200 are below a fission threshold energy of non-fissile isotopes, such as ²³⁸U.

As noted above, the sample 210 is a small volume of sample material 210. The sample may be uranium dioxide although embodiments of the invention are not limited in this respect. The sample may be of less than 100 cm³ volume such as less than 50 cm³ volume or around 10 cm³ volume. The sample may have a mass of less than 1kg or less than 500g, such as around 200g.

Advantageously the measurement of the small fissile material bearing samples suffers minimal scattering throughout and thus does not perturb the measurements significantly. A large sample is likely to reflect and scatter interrogating neutrons out of the system (200) such that the expected levels of stimulated neutrons are not detected i.e. the count rate goes down when such a large sample is inserted not up as might be expected. The perturbation of small samples still allows the expected levels of induced singles to be seen because similar numbers are reflected out of the system 200 for every sample, and it's not too many to obscure the effect.

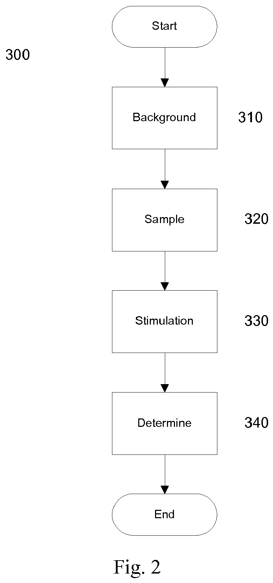

Figure 2 illustrates a method 300 of performing a neutron assay according to an embodiment of the invention.

The method comprises a process 310 of measuring background neutron detection events. The measurement of the background neutron detection events is performed using the plurality of fast neutron detectors 230. As noted above, the detectors 230 may be arranged around the stimulation neutron source. The background neutron detection events are those which are not associated with the sample 210. In other words, only those neutron detection events associated with the stimulation source, which may be the americium-lithium source and the ambient neutron background of the environment in which system 200 is located. Data is stored indicative of a period for which the background neutron detection events are recorded and a number of neutron detection events during the time period. Process 310 is performed to determine neutron detection events when the stimulation source is not responsible for stimulating any fission within the sample 210. If process 310 is performed prior to process 320 then 310 may comprise preventing the stimulation neutron source from providing neutrons to the container 200, such as by removing the stimulation neutron source. The process 310 may comprise recording neutron detection events with the stimulation source in the container 200 or directing neutrons into the container 200. The neutron detection events may be recorded for a period of 1000s to 3000s, such as for 1800s, with no sample 210 present in the container 200. It will be realised that another period of time may be used in some embodiments.

The method comprises a process 320 of measuring sample neutron detection events. The sample neutron detection events are measured using the plurality of fast neutron detectors 230 which are arranged around the small volume of sample material 210. Thus process 320 may comprise introducing the sample material 210 into the container 200. The process of measuring 310 sample neutron detection events is to determine those from any spontaneous fission (SF) in the sample. The spontaneous fission is caused by fissile or fertile material within the sample when the stimulation source is not present. In some applications the spontaneous fission may predominantly be from ²³⁸U or ²⁴⁰Pu or ²³⁸Pu or ²⁴²Pu within the sample 210, although it will be appreciated that other fissile materials may be detected. Process 320 may be performed for a relatively much longer duration than for process 210. For example, process 320 may be performed for at least 1 hour. Process 320 may be performed for up to 24 hours. In one embodiment process 320 is performed for 10 hours, although it will be realised that other durations may be selected. Process 320 may not be performed for every sample 210 and, instead, data indicative of neutron detection events from another sample may be used. That is, process 320 may be performed once to use a sample as a calibration sample and then data from the calibration sample used for other sample materials. For example it is expected that ²³⁸U content in samples may vary by a relatively small amount.

The method 200 comprises a process 330 of measuring stimulated neutron detection events. The stimulated neutron detection events are measured using the plurality of fast neutron detectors 230 when said sample 210 is irradiated by the stimulation neutron source. Process 330 may be performed for a duration of, for example, 1 hour, although it will be appreciated that other durations may be utilised.

The method comprises a process 340 of determining the presence of fissile material in the sample 210. Said determination is based upon the background neutron detection events, sample neutron detection events and the stimulated neutron detection events from steps 210-230. In process 340 the neutron detection events determined in processes 310 and 320 may be subtracted from those determined in process 230, thereby determining those neutron detection events arising from only the stimulation (induced fission) of fissile material in the sample 210. In step 340 the amount of fissile material i.e. the mass of fissile material in the sample 210 may be determined. In some embodiments step 340 may determine the enrichment of fissile material in the sample 210, such as the enrichment of ²³⁵U in the sample 210 if the mass of ²³⁸U is known or determined by other means, although the enrichment of other isotopes may be determined.

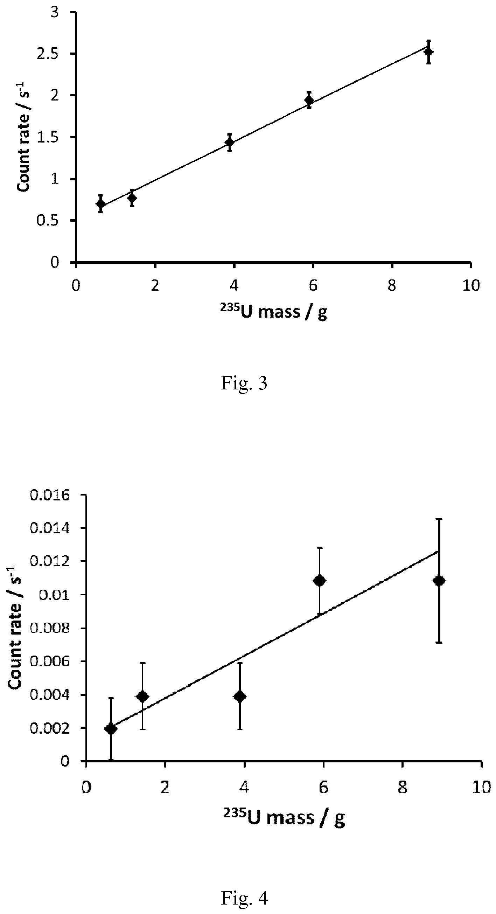

Usefulness of an embodiment of the present will now be illustrated with reference to Figures 3 and 4. Five 200g samples of uranium dioxide each of different uranium enrichment were used to represent samples having different amounts of fissile material (acquisition times in process 230 in parentheses): 8.92g (1200s), 5.90g (7200s), 3.88g (3600s), 1.42g (3600s) and 0.62g (3600s).

Table 1 details neutron detection events for processes 310 and 320 for the background and sample, respectively, only. By "singles" it is meant that one neutron detection event from a respective detector occurs within a predetermined time period or window, whereas for "doubles" two (or more) neutron detection events occur within the predetermined time period or window. Thus it will be appreciated that the method may comprise determining the number of single, uncorrelated, neutron detection events produced when said sample material is irradiated by the stimulation neutron source. Uncorrelated may be understood to mean only single neutron detection events i.e. without other related neutron detection events at the same, or similar, point in time.

**Table 1**

| | | Events | Rate / s⁻¹ |
|---|---|---|---|
| ²⁴¹Am-Li alone | Singles | 20503 | 11.39±0.08 |
| | Doubles | 6 | (3±1)×10⁻³ |
| UO₂ sample alone | Singles | 74394 | 2.067±0.007 |
| | Doubles | 52 | (1.4±0.2)×10⁻³ |

Table 2 provides neutron detection event data for each of the five samples. By "corrected rate" it is meant the event rate after subtraction of background and sample neutron detection events from processes 310, 320 as discussed above.

**Table 2**

| ²³⁵U mass (g) | | Events | Corrected rate /s⁻¹ |
|---|---|---|---|
| 8.92 | Singles | 16694 | 2.5±0.1 |
| | Doubles | 17 | (11±3)×10⁻³ |
| 5.90 | Singles | 96019 | 1.95±0.09 |
| | Doubles | 102 | (11±2)×10⁻³ |
| 3.88 | Singles | 46186 | 1.4±0.1 |
| | Doubles | 26 | (4±2)×10⁻³ |
| 1.42 | Singles | 43774 | 0.7±0.1 |
| | Doubles | 26 | (4±2)×10⁻³ |
| 0.62 | Singles | 43533 | 0.7±0.1 |
| | Doubles | 19 | (2±2)×10⁻³ |

Figure 3 illustrates the singles count rate versus ²³⁵U mass together with a linear fit to the data. In Figure 4 the same is given for the doubles count rate together with a linear fit to the data. In Table 3 the data arising from the fits to the data in Figures 3 and 4 are given for the sensitivity of the doubles and singles techniques, in terms of fissile uranium (²³⁵U) mass and ²³⁵U enrichment, where sensitivity is derived from the gradient of the plots of count rate versus mass or enrichment, respectively.

**Table 3**

| Event type | ²³⁵U mass sensitivity / per detector s⁻¹ g⁻¹ |
|---|---|
| Singles | 0.058±0.005 |
| Doubles | 0.0006±0.0002 |

The effectiveness of embodiments of the present invention may be appreciated from Table 3, wherein the singles sensitivity is illustrated.

In this case the sensitivity of 0.06 per detector s⁻¹ per g fissile mass at 7% (1σ) gives a factor ranging between 3 and 5 increase from prior methods, despite the smaller assay, similar source strength and significantly-reduced sample mass for a relatively convenient acquisition time, such as of 1 hour.

Whilst embodiments of the invention may be used to detect the presence of fissile material and mass of fissile material in a sample, it will also be appreciated that embodiments may determine an enrichment of fissile material. For example, embodiments of the invention may determine uranium enrichment within the uranium fuel cycle of the nuclear industry. If materials are known to contain uranium then combining the determination of fissile uranium i.e. ²³⁵U, by an embodiment of the invention with a value of total uranium mass or other NDA measurement of ²³⁸U will provide an a value for % ²³⁵U enrichment.

It will be appreciated that processes 310-340 may be performed in another order than illustrated in Figure 2.

An aspect of the present invention provides a system for detecting fissile material in a sample, comprising a container (220) for housing small volume of sample (210) material, a plurality of fast neutron detectors (230) arranged within the container around the sample, wherein each detector is arranged to output a signal indicative of a neutron detection event, a control unit arranged to receive the signal from each of the plurality of detectors, to store data indicative of the signals in a data storage device and to determine a number of single neutron detection events when said sample material is irradiated by the stimulation neutron source.

The single neutron detection events may be within a predetermined window of time. The control unit may be arranged to determine a number of two or more neutron detection events within the predetermined window of time. The control unit is optionally arranged to determine the number of single, uncorrelated, neutron detection events produced when said sample is irradiated by the stimulation neutron source. The control unit may be arranged to determine a presence of fissile material in the sample based on the data. The control unit is optionally arranged to store data indicative of the signals whilst the sample is irradiated with a neutron source. The system may comprise a neutron source arranged to irradiate the sample. The detectors are optionally arranged at periodic intervals around the sample. The control unit optionally comprises a derandomizer module arranged to receive the signals from the detectors and to output a sequential signal based thereon. The control unit may be arranged to determine the presence of fissile material is based upon single neutron detection events for the background neutron detection events, the sample neutron detection events and the stimulated neutron detection events. The control unit is optionally arranged to determine the presence of fissile material comprises subtracting the background neutron detection events and the sample neutron detection events from the stimulated neutron detection events.

An aspect of the invention provides computer software which, when executed by a computer, is arranged to perform a method according to an aspect of the invention. The computer software may be stored on a computer readable medium. The computer software is optionally tangibly stored on the computer readable medium.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A method of detecting fissile material, comprising:
measuring (310) background neutron detection events using a plurality of fast neutron detectors (230) arranged around a stimulation neutron source;
measuring (320) sample neutron detection events using the plurality of fast neutron detectors (230) arranged around a small volume of sample material (210);
measuring (330) stimulated neutron detection events using the plurality of fast neutron detectors (230) when said sample material is irradiated by the stimulation neutron source, wherein the measuring comprises determining a number of single neutron detection events; and
determining (340) a presence of fissile material in the sample material based upon the background neutron detection events, sample neutron detection events and the stimulated neutron detection events.

2. The method of claim 1, wherein the single neutron detection events are within a predetermined window of time.

3. The method of claim 2, wherein the measuring comprises determining a number of two or more neutron detection events within the predetermined window of time.

4. The method of claim 1, 2 or 3, wherein the measuring comprises determining the number of single, uncorrelated, neutron detection events produced when said sample material is irradiated by the stimulation neutron source.

5. The method of any preceding claim, wherein the sample (210) is one or more of:
less than 1kg in mass;
less than 500g in mass; and/or
less than 100cm³ in volume.

6. The method of any preceding claim, comprising determining a mass of the fissile material in the sample.

7. The method of any preceding claim, wherein the sample comprises uranium.

8. The method of any preceding claim, comprising:
determining a uranium enrichment of the sample; and/or
determining the uranium-235 enrichment of the sample.

9. The method of any preceding claim, wherein:
the fast neutron detectors (230) are arranged within an enclosure around the sample (210);
the fast neutron detectors (230) are arranged to detect neutrons having an energy above 0.1 MeV.

10. The method of any preceding claim, wherein the determining (240) the presence of fissile material is based upon single neutron detection events for the background neutron detection events, the sample neutron detection events and the stimulated neutron detection events.

11. The method of any preceding claim, wherein the determining (240) the presence of fissile material comprises subtracting the background neutron detection events and the sample neutron detection events from the stimulated neutron detection events.

12. A system for detecting fissile material in a sample, comprising:
a container (220) for housing small volume of sample (210) material;
a plurality of fast neutron detectors (230) arranged within the container around the sample, wherein each detector is arranged to output a signal indicative of a neutron detection event;
a control unit arranged to receive the signal from each of the plurality of detectors, to store data indicative of the signals in a data storage device and to determine a number of single neutron detection events when said sample material is irradiated by the stimulation neutron source.

13. The system of claim 12, wherein the single neutron detection events are within a predetermined window of time.

14. The system of claim 13, wherein the control unit is arranged to determine a number of two or more neutron detection events within the predetermined window of time.

15. The system of claim 12, 13 or 14, wherein the control unit is arranged to determine the number of single, uncorrelated, neutron detection events produced when said sample is irradiated by the stimulation neutron source.
